Europäisches Patentamt

European Patent Office

Office européen des brevets

(19)

(11) Veröffentlichungsnummer : **0 165 412**
**B1**

(12) **EUROPÄISCHE PATENTSCHRIFT**

(45) Veröffentlichungstag der Patentschrift :
08.07.87

(51) Int. Cl.⁴ : **B 29 C 47/12**, B 29 C 47/06 //
**B29L30:00**

(21) Anmeldenummer : 85105020.3

(22) Anmeldetag : 25.04.85

(54) Aufklappbarer Presskopf für Strangpressen.

(30) Priorität : 19.05.84 DE 3418766
27.06.84 DE 3423678

(43) Veröffentlichungstag der Anmeldung :
27.12.85 Patentblatt 85/52

(45) Bekanntmachung des Hinweises auf die Patenterteilung : 08.07.87 Patentblatt 87/28

(84) Benannte Vertragsstaaten :
AT BE DE FR GB IT LU NL SE

(56) Entgegenhaltungen :
DE-A- 2 236 363
DE-A- 3 238 284
DE-B- 1 729 618
DE-B- 2 201 631

(73) Patentinhaber : **Continental Gummi-Werke Aktiengesellschaft**
**Königsworther Platz 1**
**D-3000 Hannover 1 (DE)**

(72) Erfinder : **Gerloff, Klaus, Dipl.-Ing.**
**Tischbeinstrasse 5**
**D-3004 Isernhagen 2 (DE)**
Erfinder : **Menell, Hans, Dipl.-Ing.**
**Heinrich.-Holt-Strasse 14**
**D-3000 Hannover 91 (DE)**
Erfinder : **Bark, Ludolf, Dipl.-Ing.**
**Schultze-Delitzch Strasse 23**
**D-3008 Garbsen 4 (DE)**
Erfinder : **Klöpper, Friedrich, Ing.**
**Am Hufeisen 24**
**D-3013 Barsinghausen (DE)**
Erfinder : **de Vries, Gerhard, Dr. Dipl.-Ing.**
**Im Hespe 36**
**D-3008 Garbsen 4 (DE)**

EP 0 165 412 B1

## Beschreibung

Die Erfindung bezieht sich auf aufklappbare Preßköpfe für Strangpressen zum Formen von plastischen Kautschuk- oder Kunststoffmischungen, mit um feste Drehpunkte am Preßkopf verschwenkbaren und vor der auswechselbaren Strangpreßdüse dichtend an den Preßkopf andrückbaren Kopfteilen. Ein solcher Preßkopf ist beispielsweise aus DE-BZ-2 201 631 bekannt.

Für solche Strangpressen, wie sie beispielsweise zum Herstellen der Rohlaufstreifen für Fahrzeugluftreifen, aber auch von andersartigen Profilsträngen flachgestreckter Querschnittsform, und zwar sowohl einheitlicher Beschaffenheit als auch im Mehrkomponentenaufbau, Verwendung finden, gilt allgemein die Forderung nach freier Zugänglichkeit der nach der Strangpreßdüse führenden Strömungskanäle, um diese vor jedem Wechsel der verarbeiteten Mischung freilegen und von allen Rückständen gründlich reinigen zu können. Dieser Forderung wird mit der öffnungsfähigen Ausbildung der Strangpreßköpfe entsprochen. Zum dichten Anlegen der die Wandungen der Strömungskanäle bildenden gegeneinander beweglichen Preßkopfteile werden nach bekannten Vorschlägen mechanische Spannklammern (DE-BZ-1 729 618) oder auch auf Schrägflächen auflaufende hydraulisch betätigte Keilschieber (DE-BZ-2 201 631) verwendet. In allen Fällen werden dabei aus der Wechselwirkung des inneren Massedruckes und der äußeren Schließkräfte miteinander hohe Biegemomente in die verriegelten Kopfteile eingeleitet, und da schon nur geringfügige Spalte in Größenordnungen von wenigen hundertstel Millimetern zwischen den Dichtflächen Preßmasse aus den Strömungskanälen ausfließen lassen, sind die betroffenen Teile möglichst formsteif auszubilden. Dies führt andererseits aber wieder zu unverhältnismäßig schweren Konstruktionen der Preßköpfe mit den Nachteilen hohen Gewichtes und hoher Fertigungskosten und zu aus der Dimensionierungsgeometrie bedingten Behinderungen in der Zugänglichkeit der Strömungskanäle mit Erschwernissen in den Reinigungsmöglichkeiten. Der Erfindung liegt demgegenüber als Aufgabe zugrunde, durch eine neuartige Gestaltung des öffnungsfähigen Preßkopfes an Strangpressen die erwünschte freie Zugänglichkeit der Preßmasse führenden Kanäle mit einer vergleichsweise leichten und einfachen Konstruktion zu erhalten.

Zum Lösen dieser Aufgabe sind an Preßköpfen der eingangs geschilderten Gattung erfindungsgemäß die verschwenkbaren Kopfteile im Schließzustand über jeweils ein elastisch nachgiebiges Federelement gegen den Preßkopf abgestützt, wobei nach wichtigen Teilmerkmalen der Erfindung die Federelemente lösbar mit dem Preßkopf verbunden und als Einkammer-Druckmittelzylinder ausgebildet sind, deren freie Querschnittsfläche im wesentlichen oder angenähert der Größe der mit Preßmasse beaufschlagten Innenfläche des jeweils zugeordneten Preßkopfteiles entsprechend bemessen, darüber hinaus auch nach der Form im wesentlichen oder angenähert kongruent ist. Hiervon ausgehend ist vorteilhaft der Druckmitteldruck in den Zylindern in Abhängigkeit von dem statischen Druck der Preßmasse im Innern des Preßkopfes regelbar.

Die Erfindung zieht als erste Folge eine stetige, genaue Abstimmung der auf die beweglichen Preßkopfteile wirksamen Schließkräfte auf die jeweils vorherrschenden veränderlichen Betriebsbedingungen nach sich, so daß Überdimensionierungen mit den daraus resultierenden unnötigen Gewichts- und Kostenbelastungen von vornherein vermieden werden können. Es ergibt sich hieraus aber auch der besondere Vorteil, daß schädliche Druckspitzen durch selbsttätiges kurzzeitiges Öffnen schon im Entstehen noch vor dem Eintreten plastischer Verformungen oder von Materialbrüchen abgebaut werden, wodurch eine häufige Schadensursache und damit der sonst unvermeidlich bestehende Zwang zu ständigen Unterhaltungsarbeiten entfallen.

In weiterer Ausgestaltung der Erfindung sind die als Federelemente dienenden Druckmittelzylinder gegen die verschwenkbaren Kopfteile wärmeisoliert angebracht, wobei wahlweise die den zugehörigen Druckmittelzylindern zugekehrte Außenfläche der verschwenkbaren Kopfteile oder deren mit Preßmasse beaufschlagte Innenfläche mit einer Auflage aus einem schlecht wärmeleitenden Werkstoff versehen sein kann. Die gleichzeitige Anwendung dieser beiden Maßnahmen liegt im Rahmen der Erfindung.

Diese besondere Ausgestaltung der Preßköpfe hat nicht nur ein an sich bekanntes thermisches Isolieren zum Vermindern von Wärmeverlusten zur Folge. Unter den vorgegebenen spezifischen Ausgangsbedingungen stellt sich vielmehr als wesentlicher Vorteil die Abschirmung der Druckmittelzylinder gegen unkontrollierte Beeinflussung durch Wärmekonvektion heraus. Von besonderer Bedeutung ist diese Tatsache für Hydrauliksysteme, weil die üblichen Hydraulikflüssigkeiten unter der Einwirkung höherer Temperaturen zu Zersetzung und Dampfblasenbildung neigen, was die Ursache von oft unerklärlichen Fehlfunktionen der damit betriebenen Druckzylinder sein kann. In richtiger Erkenntnis der Kausalzusammenhänge schafft die Erfindung mit vergleichsweise einfachen Mitteln eine auch im Dauerbetrieb der Strangpressen wirksame Abhilfe gegen die aus den thermischen Vorgängen im Bereich des Preßkopfes herrührenden Störungen und erfüllt damit alle Voraussetzungen für einen erfolgreichen Einsatz der vorgesehenen Druckmittelzylinder.

Geeignete Werkstoffe schlechter Wärmeleitfähigkeit, die gleichzeitig aber auch den zu fordernden hohen Ansprüchen an ihre Festigkeit genügen, sind beispielsweise Tantal-Legierungen. Die Erfindung ist jedoch an keine bestimmte Werkstoffauswahl gebunden.

Die Erfindung ist anhand der schematischen Darstellung eines Ausführungsbeispieles in der Zeichnung verdeutlicht. Es zeigen :

Figur 1 den vorderen Abschnitt des aufklappbaren Prepkopfes einer Strangpresse im Axialschnitt ;

Figur 2 ein Schnittbild nach der Linie II-II in Fig. 1 und

Figur 3 einen Preßkopf abgewandelter Ausführungsform ebenfalls im Axialschnitt.

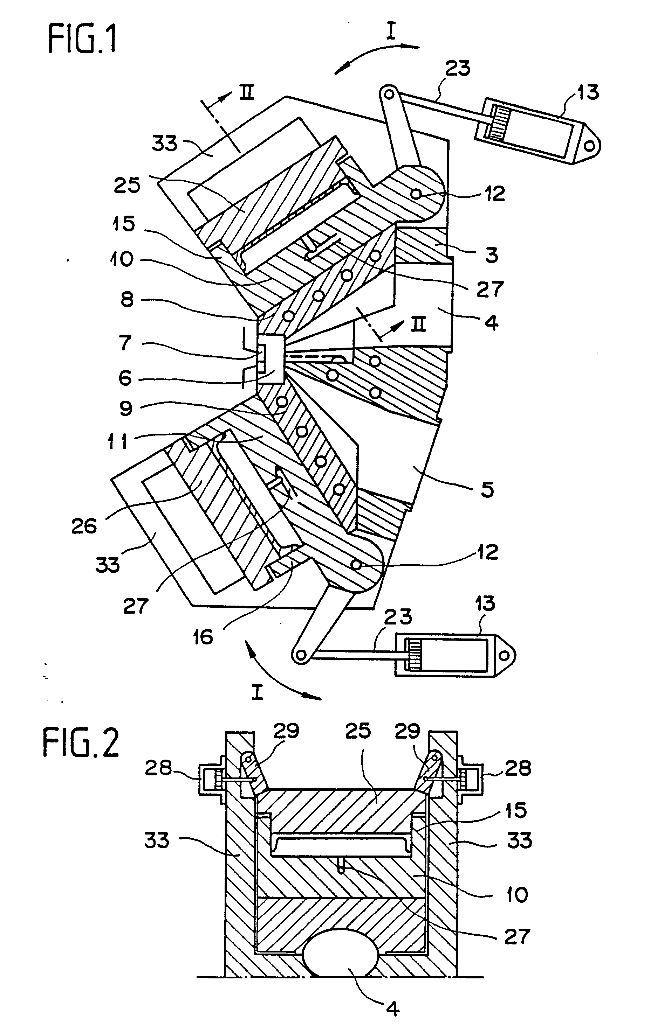

Der in Fig. 1 gezeichnete Preßkopf 3 bildet den Abschluß und formgebenden Ausgangsteil einer aus zwei nicht weiter dargestellten Schneckenstrangpressen zusammengesetzten kompletten Anlage, in der die von den beiden Strangpressen über getrennte Kanäle 4, 5 geförderten verschiedenen Mischungsströme in einer gemeinsamen Vorschablone 6 zusammenfließen, um durch ein auswechselbares Düsenmundstück 7 als einheitlicher zusammenhängender Profilstrang fortlaufend ausgepreßt zu werden. Die Außenwandungen der Strömungskanäle 4, 5 bestehen in ihrem schräg gegen die Vorschablone 6 zulaufenden vorderen Teil aus losen Platten 8, 9, die fest an Schwenkarmen 10, 11 angebracht sind und mit diesen um mit dem Preßkopf 3 zusammenhängende Drehzapfen 12 aus der gezeichneten abdichtenden Endstellung heraus im Sinne der Doppelpfeile I zwecks Freigabe der Strömungskanäle 4, 5 in eine Öffnungsstellung verschwenkt werden können. Zum Verschwenken der Platten 8, 9 sind hydraulische Stellzylinder 13 mit an die Schwenkarme 10, 11 angelenkter ein- und ausfahrbarer Kolbenstange 23 vorgesehen.

Im Schließzustand des Preßkopfes 3 stützen sich die verschwenkbaren Platten 8, 9 über Einkammer-Druckmittelzylinder 15, 16 mit dichtend eingesetzten Kolben 25, 26 gegen den Preßkopf ab. Die Zylinder 15, 16 sind mit ihrem geschlossenen Boden fest an den Schwenkarmen 10, 11 angebracht oder, wie es für das gezeichnete Ausführungsbeispiel angenommen ist, einstückig mit diesem hergestellt, während die um nur verhältnismäßig kurze Hubstrecken beweglichen Kolben 25, 26 in lösbarer formschlüssiger Verbindung mit Rahmenelementen 33 des Preßkopfes stehen. Über eine Bohrung 27 in den Schwenkarmen 10, 11 und nicht gezeichnete äußere Anschlußleitungen kann der Arbeitskammer der Zylinder 15, 16 Druckflüssigkeit zugeführt werden, um auf diese Weise ein Hydraulikpolster in die Verriegelung der Platten 8, 9 einzubauen. Die Höhe des eingesteuerten Flüssigkeitsdruckes wird zweckmäßig in Abhängigkeit von dem in den Strömungskanälen 4 und 5 herrschenden statischen Druck der Preßmasse geregelt.

Im Schließzustand des Preßkopfes 3 mit dichtend anliegenden Platten 8, 9 stützen sich die einseitig mit dem Zylinderinnendruck beaufschlagten Kolben 25, 26 über bewegliche Stößel 29 formschlüssig gegen die Rahmenelemente 33 ab (Fig. 2). Die Stößel 29 sind verschwenkbar an den Rahmenelementen angebracht und können mit Hilfe zugeordneter Stellzylinder 28 aus der gezeichneten Gebrauchsstellung in eine Ruhestellung zurückgeschwenkt werden, um für Inspektionsarbeiten den freien Zugang zu den Kolben 25, 26 und den Zylindern 15, 16 zu ermöglichen.

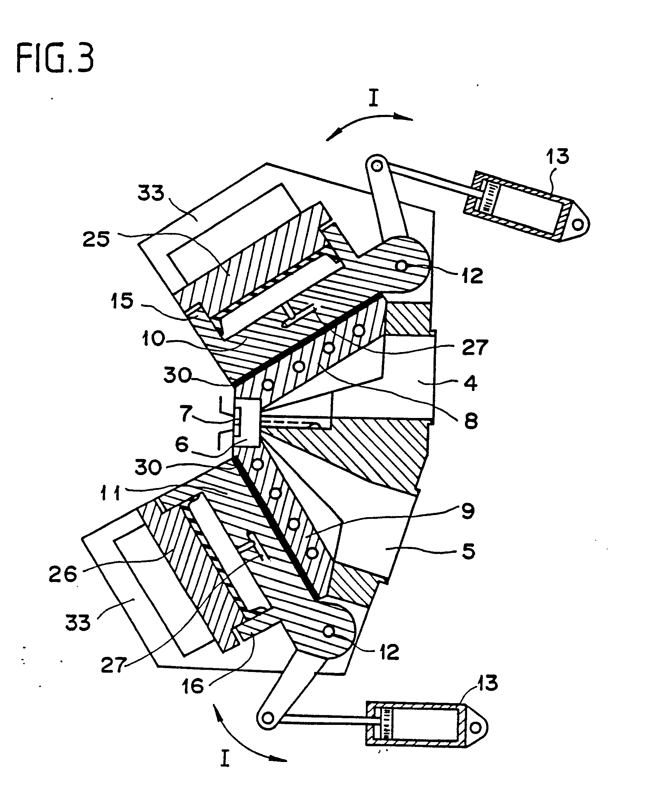

Der in Fig. 3 gezeichnete Preßkopf unterscheidet sich von der Ausführungsform gemäß Fig. 1 allein dadurch ; daß zwischen die Platten 8, 9 und die den Boden der Zylinder 15, 16 bildenden Schwenkarme 10, 11 aus einer Tantal-Legierung oder einem anderen hochfesten Werkstoff schlechter Wärmeleitfähigkeit hergestellte Isolierplatten 30 eingesetzt sind. Die in Form von dünnen Blechen auf die Außenflächen der Platten 8, 9 aufgebrachten Isolierplatten 30 unterbinden den Wärmetransport von den beheizten Preßkopfteilen durch Konvektion nach den Zylindern 15, 16 und verhindern die der angestrebten Polsterwirkung abträgliche thermische Beeinflussung der Druckflüssigkeit in dem Hydrauliksystem der Zylinder 15, 16. Aufbau und Wirkungsweise des Preßkopfes sind im übrigen wie im Zusammenhang mit Fig. 1 und 2 beschrieben.

**Patentansprüche**

1. Aufklappbarer Preßkopf für Strangpressen zum Formen von plastischen Kautschuk- oder Kunststoffmischungen, mit um feste Drehpunkte am Preßkopf verschwenkbaren und vor der auswechselbaren Strangpreßdüse dichtend an den Preßkopf andrückbaren Kopfteilen, dadurch gekennzeichnet, daß die verschwenkbaren Kopfteile (8, 9) im Schließzustand über jeweils ein elastisch-nachgiebiges Federelement gegen den Preßkopf (3) abgestützt sind.

2. Preßkopf nach Anspruch 1, dadurch gekennzeichnet, daß die Federelemente lösbar mit dem Preßkopf (3) verbunden sind.

3. Preßkopf nach den Ansprüchen 1 und 2, dadurch gekennzeichnet, daß die Federelemente Einkammer-Druckmittelzylinder (15, 16) sind.

4. Preßkopf nach Anspruch 3, dadurch gekennzeichnet, daß die freie Querschnittsfläche jeweils eines Druckmittelzylinders (15, 16) im wesentlichen oder angenähert der Größe der mit Preßmasse beaufschlagten Innenfläche des zugehörigen Kopfteiles (8, 9) entsprechend bemessen ist.

5. Preßkopf nach Anspruch 4, dadurch gekennzeichnet, daß die freie Querschnittsfläche der Druckmittelzylinder (15, 16) der mit Preßmasse beaufschlagten Innenfläche der zugehörigen Kopfteile (8, 9) im wesentlichen oder angenähert kongruent ist.

6. Preßlopf nach den Ansprüchen 4 und 5, dadurch gekennzeichnet, daß der Druckmitteldruck in den Zylindern (15, 16) in Abhängigkeit von dem statischen Druck der Preßmasse im Innern (4, 5) des Preßkopfes (3) regelbar ist.

7. Preßkopf nach den Ansprüchen 1 bis 6, dadurch gekennzeichnet, daß die Druckmittelzylinder (15, 16) gegen die verschwenkbaren Kopfteile (8, 9) wärmeisoliert an diesen angebracht sind.

8. Preßkopf nach Anspruch 7, dadurch gekennzeichnet, daß die den zugehörigen Druckmittelzylindern (15, 16) zugekehrte Außenfläche der verschwenkbaren Kopfteile (8, 9) mit einer Auflage (30) aus einem schlecht wärmeleitenden Werkstoff versehen sind.

9. Preßkopf nach Anspruch 7 oder 8, dadurch gekennzeichnet, daß die mit Preßmasse beaufschlagte Innenfläche der verschwenkbaren Kopfteile (8, 9) mit einer Auflage aus einem schlecht wärmeleitenden Werkstoff versehen ist.

**Claims**

1. Hinged die head for extruders for moulding plastic mixtures of rubber or plastics material, having head components which are pivotable about fixed pivot points on the die head and can be pressed sealingly against the die head in front of the interchangeable extrusion nozzle, characterised in that, in their closed state, the pivotable head components (8, 9) are each supported on the die head (3) by a respective elastically resilient spring-like element.

2. Die head according to claim 1, characterised in that the spring-like elements are detachably connected to the die head (3).

3. Die head according to claims 1 and 2, characterised in that the spring-like elements are single-chamber pressure medium cylinders (15, 16).

4. Die head according to claim 3, characterised in that the free cross-sectional area of each pressure medium cylinder (15, 16) is dimensioned so as to correspond substantially or approximately to the size of the internal area of the associated head component (8, 9) which is filled with mouldable material.

5. Die head according to claim 4, characterised in that the free cross-sectional area of the pressure medium cylinders (15, 16) is substantially or approximately congruent with the internal area of the associated head components (8, 9) which is filled with mouldable material.

6. Die head according to claims 4 and 5, characterised in that the pressure of the pressure medium in the cylinders (15, 16) is adjustable in dependence on the static pressure of the mouldable material in the interior (4, 5) of the die head (3).

7. Die head according to claims 1 to 6, characterised in that the pressure medium cylinders (15, 16) are mounted on the pivotable head components (8, 9) so as to be thermally insulated therefrom.

8. Die head according to claim 7, characterised in that the outer surface of the pivotable head components (8, 9) facing the associated pressure medium cylinders (15, 16) is provided with an overlay (30) formed from a poor heat-conducting material.

9. Die head according to claim 7 or 8, characterised in that the inner surface of the pivotable head components (8, 9) which is loaded with mouldable material is provided with an overlay formed from a poor heat-conducting material.

**Revendications**

1. Tête de filière relevabe pour extrudeuses servant au moulage de mélanges plastiques de caoutchouc ou de matières plastiques, comportant des parties pouvant pivoter autour de centres fixes sur la tête de filière et pouvant être appliquées de façon étanche contre la tête de filière en avant de la buse de filage amovible, caractérisée en ce que les parties pivotantes (8, 9) de la tête sont soutenues, dans la condition de fermeture, contre la tête de filière (3) respectivement par l'intermédiaire d'un élément de suspension élastiquement souple.

2. Tête de filière selon la revendication 1, caractérisée en ce que les éléments de suspension sont reliés de façon séparable à la tête de filière (3).

3. Tête de filière selon les revendications 1 et 2, caractérisée en ce que les éléments de suspension sont des cylindres fluidiques à chambre unique (15, 16).

4. Tête de filière selon la revendication 3, caractérisée en ce que la surface libre de section de chaque cylindre fluidique (15, 16) est dimensionnée en correspondance sensiblement ou approximativement à la grandeur de la surface intérieure, sollicitée par la masse extrudée, de la partie associée de tête (8, 9).

5. Tête de filière selon la revendication 4, caractérisée en ce que la surface libre de section des cylindres fluidiques (15, 16) est sensiblement ou approximativement identique à la surface intérieure, sollicitée par la masse extrudée, des parties associées (8, 9) de la tête.

6. Tête de filière selon les revendications 4 et 5, caractérisée en ce que la pression du fluide dans les cylindres (15, 16) est réglable en fonction de la pression statique de la masse extrudée à l'intérieur (4, 5) de la tête de filière (3).

7. Tête de filière selon les revendications 1 à 6, caractérisée en ce que les cylindres fluidiques (15, 16) sont montés de façon thermiquement isolée sur les parties pivotantes (8, 9) de la tête.

8. Tête de filière selon la revendication 7, caractérisée en ce que les surfaces extérieures, tournées vers les cylindres fluidiques associés (15, 16), des parties pivotantes de tête (8, 9) sont pourvues d'un support (30) formé d'un matériau mauvais conducteur de la chaleur.

9. Tête de filière selon la revendication 7 ou 8, caractérisée en ce que la surface intérieure, sollicitée par la masse extrudée, des parties pivotantes de tête (8, 9) est pourvue d'un support formé d'un matériau mauvais conducteur de la chaleur.

FIG.1

FIG.2

# FIG.3